# EUROPEAN PATENT APPLICATION

(11) **EP 2 472 249 A1**
(43) Date of publication of application: **04.07.2012**
(21) Application number: 11188712.1
(22) Date of filing: 10.11.2011
(51) Int. Cl.: G01N 21/35, G01N 21/61, G01N 21/33

(54) **Gas detecting system and method thereof**

(30) Priority: 30.12.2010 CN 201010624593
(71) Applicant: Getac Technology Corporation, Taipei City 11568 (TW)
(72) Inventor: Wang, Hsien-Yu, 11568 Taipei City (TW)
(74) Representative: Schmidt, Axel

(57) **Abstract**

A gas detecting system includes a gas measuring device and a computer device. The gas measuring device includes a chamber, at least one light source, at least one sensor, a processor, and a connection port. The computer device includes a joining port and an arithmetic unit, and the connection port is electrically connected to the joining port. The arithmetic unit outputs at least one control signal after a control procedure. The processor controls the light source disposed in the chamber to emit light which passes through an air cell of the chamber according to the control signal such that the sensor disposed in the chamber outputs a sensing signal to the processor. The processor outputs a characteristic value to the computer device according to the sensing signal. Therefore, the computer device can control and start the gas measuring device to perform gas detection through outputting the control signal.

## Description

### BACKGROUND OF THE INVENTION

### Field of the Invention

The present invention relates to a gas detecting system and method thereof, and more particularly to a gas detecting system and method thereof capable of controlling and starting gas detection in multiple modes.

### Related Art

In recent years, with the rapid development of economy, the living environment of human beings is gradually contaminated. However, with the rise of the awareness of environmental protection and the increasing demands for the quality of life of people, how to effectively control hazardous substances in the living environment of human beings becomes an important issue.

Generally, gas detecting methods are mainly categorized into four types. The first gas detecting method is the use of semiconductor sensors. However, due to the disadvantages of high power consumption of the semiconductor sensors, it is difficult to develop the semiconductor sensors. The second gas detecting method is the use of bio-sensors, mainly used for detecting ammonia and smell of the environment. However, due to the high cost, the bio-sensors are rarely used in the field of gas detection. The third gas detecting method is the use of electrochemical sensors, mainly used for detecting low-concentration gases of 50 Parts Per Million PPM below and special gases such as Hydrogen Cyanide HCN, Germane GeH₄, Silane SiH₄ and Hydrogen sulfide H₂S . The fourth gas detecting method is the use of chemical sensors. As it is unnecessary to contact the gas, the chemical sensors are applicable in remote monitoring. All the sensors described above are devices needing to convert the detected gas concentration into an electronic signal.

Although a conventional gas detecting device such as gas chromatography has the advantages of high sensitivity, high accuracy, and being capable of detecting low-concentration gases, the price of the conventional gas detecting device is high and the volume of the conventional gas detecting device is large, which do not meet the demands for the development of the electronic technology towards light, thin, short, and small designs. In order to solve the problems, the industries in the art have proposed a portable gas detecting device, to improve the mobility of gas detection. However, the portable gas detecting device still needs to have an interface control unit with control and operation functions in order to perform gas detection, and the portable gas detecting device has a power control unit, which leads to the problem that the cost cannot be lowered and the volume cannot be further reduced in fabrication of the portable gas detecting device. In addition, a common portable gas device performs gas detection in a manual manner, and if other different control and start modes need to be added, the fabrication cost of the portable gas device may be increased, which does not meet the market demands.

### SUMMARY OF THE INVENTION

In view of the above problems, the present invention is a gas detecting system and a gas detecting method, to solve the problem in the prior art that the cost cannot be lowered and the volume cannot be further reduced.

The gas detecting system of the present invention can be used for detecting a gas property in an external environment. In an embodiment, the gas detecting system comprises a gas measuring device and a computer device. The gas measuring device comprises a chamber, at least one light source, at least one sensor, a processor and a connection port. The computer device comprises a joining port and an arithmetic unit. The chamber comprises an air cell and at least one opening, and the air cell is communicated with the external environment through the opening. The light source and the sensor are disposed in the chamber, and the connection port is electrically connected to the joining port. The arithmetic unit outputs at least one control signal after a control procedure, the processor controls the light source to emits light according to the control signal, such that the sensor generates a sensing signal, and the processor receives and processes the sensing signal and outputs a characteristic value to the computer device.

In an embodiment, the arithmetic unit comprises a correction module and a comparison module. The correction module receives the characteristic value and generates a concentration value, and the comparison module compares the concentration value with a preset value to generate a result signal.

In an embodiment, the computer device further comprises an alarm, electrically connected to the arithmetic unit. When the result signal is a dangerous state, the alarm generates a sound signal.

According to an embodiment of the gas detecting method of the present invention, the gas detecting method comprises: generating at least one control signal to a processor, and the processor controlling a light source to emit light, wherein the light source is disposed in a chamber; a sensor receiving the light and generating a sensing signal, wherein the sensor is disposed in the chamber and is used for receiving the light emitted by the light source correspondingly; the processor receiving the sensing signal and performing a processing procedure to output a characteristic value; and receiving the characteristic value through a joining port and generating a result signal through an operation procedure.

In another embodiment, when the result signal is a dangerous state, the alarm generates a sound signal.

The gas detecting system of the present invention can be used for detecting a gas in an external environment. With the design of electrical connection between the joining port and the connection port, on one hand, the computer device can be effectively used for managing and controlling the operation of the gas detecting system and the running of the gas detection; and on the other hand, the fabricating cost of the gas measuring device can be effectively reduced. Through the selection of the light source and the sensor, the gas detecting system can detect multiple gases simultaneously. Moreover, with the arrangement of the alarm, when the concentration of the gas detected is excessively high, the alarm can warn the user that the external environment may be dangerous.

### BRIEF DESCRIPTION OF THE DRAWINGS

The present invention will become more fully understood from the detailed description given herein below for illustration only, and thus are not limitative of the present invention, and wherein:
FIG. 1 is a schematic block circuit diagram of an embodiment of a gas detecting system of the present invention;
FIG. 2A is a schematic cross-sectional structural view of a first embodiment of a chamber of the present invention;
FIG. 2B is a schematic cross-sectional structural view of a second embodiment of the chamber of the present invention;
FIG. 2C is a schematic cross-sectional structural view of a third embodiment of the chamber of the present invention;
FIG. 2D is a schematic cross-sectional structural view of a fourth embodiment of the chamber of the present invention;
FIG. 2E is a schematic cross-sectional structural view of a fifth embodiment of the chamber of the present invention;
FIG. 3 is a schematic flow chart of a first embodiment of a gas detecting method of the present invention applied to a gas detecting system;
FIG. 4 is a schematic flow chart of an embodiment of Step 606 in FIG. 3;
FIG. 5 is a schematic flow chart of an embodiment of Step 608 in FIG. 3;
FIG. 6 is a schematic flow chart of a second embodiment of the gas detecting method of the present invention applied to a gas detecting system;
FIG. 7 is a schematic flow chart of a third embodiment of the gas detecting method of the present invention applied to a gas detecting system; and
FIG. 8 is a schematic flow chart of a fourth embodiment of the gas detecting method of the present invention applied to a gas detecting system.

### DETAILED DESCRIPTION OF THE INVENTION

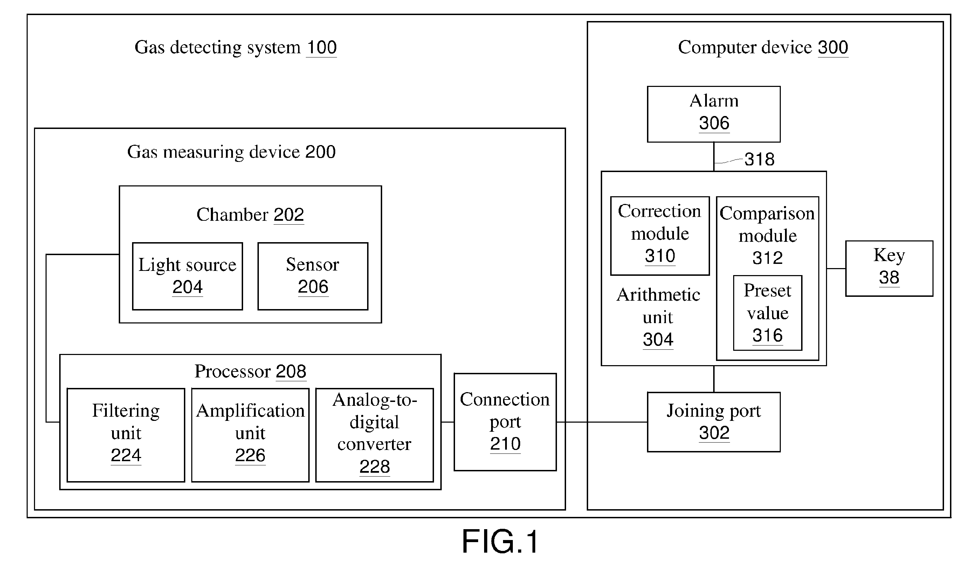

FIG. 1 is a block circuit diagram of an embodiment of a gas detecting system according to the present invention. In this embodiment, a gas detecting system 100 can be used for detecting a gas property in an external environment. The gas detecting system 100 comprises a gas measuring device 200 and a computer device 300. The gas measuring device 200 comprises a chamber 202, a light source 204, a sensor 206, a processor 208 and a connection port 210. The computer device 300 comprises a joining port 302 and an arithmetic unit 304. The computer device 300 may be, but is not limited to, a notebook computer. That is to say, the computer device 300 may also be a desktop computer or a hand-held computer. The light source 204 and the sensor 206 are disposed in the chamber 202, the processor 208 is electrically connected to the light source 204 and the sensor 206, and the connection port 210 is electrically connected to the processor 208. The joining port 302 is electrically connected to the connection port 210, and the arithmetic unit 304 is electrically connected to the joining port 302. The connection port 210 and the joining port 302 may be, but are not limited to, a Universal Serial Bus USB interface, but this embodiment is not intended to limit the present invention. That is to say, the connection port 210 and the joining port 302 may both be a RS-232 interface.

In this embodiment, the light source 204 may be, but is not limited to, an infrared IR light source having a wavelength of 3 µm to 5 µm, the sensor 206 may be, but is not limited to, a non dispersive infrared sensor NDIR, the number of the light source 204 may be, but is not limited to, one, and the number of the sensor 206 may be, but is not limited to, one. That is to say, the light source 204 may also be an ultraviolet UV light source, the sensor 206 may also be a UV sensor, the number of the light source 204 may be two, and the number of the sensor 206 may be one, which may be adjusted according to actual demands. It should be noted that, the light emitted by the light source 204 should have a wavelength that the sensor 206 can sense, and the selection of the light source 204 is correlated with the gas in the external environment. For example, when the gas detecting system 100 intends to detect carbon dioxide CO₂, the light source 204 may be selected to be an IR light source for emitting light having a wavelength of 4 µm to 5 µm; and when the gas detecting system 100 intends to detect ozone O₃, the light source 204 may be selected to be a UV light source for emitting light having a wavelength of 30 nm to 40 nm.

In this embodiment, as the light source 204 may be an IR light source for emitting light having a wavelength of 3 µm to 5 µm, and the sensor 206 may be an NDIR sensor with three filters not shown here, that is, the sensor 206 is capable of sensing IR light having three different wavelengths simultaneously. Thus, the gas detecting system 100 may detect carbon dioxide, carbon monoxide CO and methane CH₄ simultaneously. Carbon dioxide mainly absorbs the light in a wavelength band of about 4.2 µm to 4 . 5 µm, carbon monoxide mainly absorbs the light in a wavelength band of about 4.5 µm to 4.8 µm, and methane mainly absorbs the light in a wavelength band of about 3.2 µm to 3.5 µm. That is to say, by using the physical property that different gases mainly absorb light of different wavelength bands, the gas detecting system 100 may be enabled to detect multiple gases simultaneously. Furthermore, when the gas detecting system 100 needs to detect multiple gases simultaneously, light 218 emitted by the light source 204 has a large wavelength range, and the wavelength range of the light 218 may be expanded by selecting an adjustable light source 204 or increasing the number of the light source 204, In this embodiment, the sensor 206 has three sensing units not shown here, each sensing unit comprises a filter not shown, and the wavelength of the light 218 that can pass through each filter is correlated with the gas that the gas detecting system 100 intends to detect. Furthermore, in order to reduce the interference of gas flow, a reference air cell not shown here may be disposed in the chamber 202, and the sensor 206 is changed to be an NDIR sensor having four sensing units not shown here. Specifically, when the gas measuring device 200 performs gas measurement, the light 218 emitted by the light source 204 may pass through an air cell 212 and the reference air cell simultaneously and be incident into the four sensing units of the sensor 206, wherein a signal sensed by one of the four sensing units after the light 218 passes through the reference air cell may be used to modify signals sensed by the other three sensing units -that is, the signals sensed by the three sensing units after the light 218 passes through the air cell 212-, so as to reduce the error generated due to the interference of gas flow.

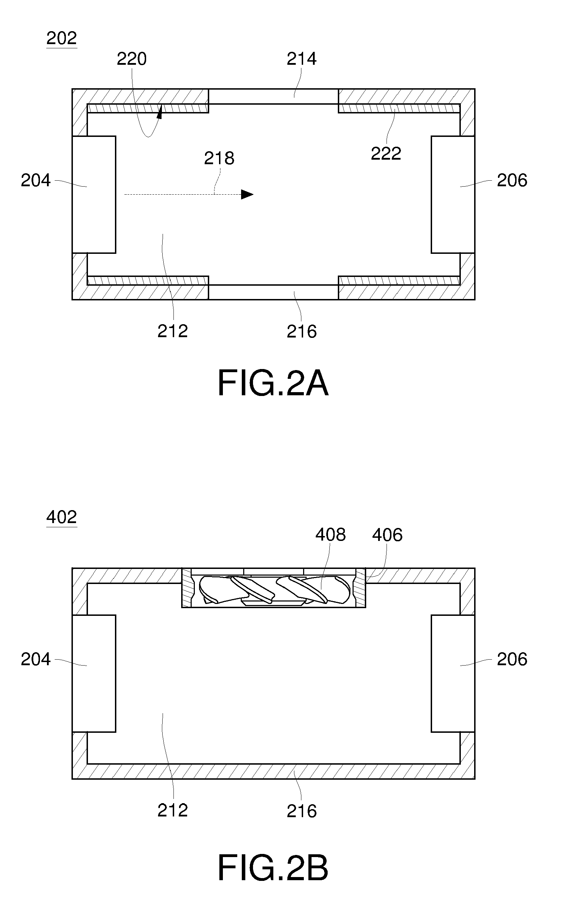

FIG. 2A is a schematic cross-sectional structural view of a first embodiment of a chamber of the present invention. Referring to FIG. 2A, the chamber 202 comprises the air cell 212 and openings 214 and 216, the air cell 212 is communicated with the external environment through the openings 214 and 216, and the openings 214 and 216 are disposed at two opposite sides of the chamber 202 respectively. The light source 204 and the sensor 206 are disposed at two ends of the chamber 202 respectively, such that the sensor 206 may receive the light 218 emitted by the light source 204 correspondingly. Moreover, in order to increase the sensitivity of the sensor 206, a reflective layer 222 is coated on an inner surface 220 of the chamber 202, and the reflective layer 222 may reflect and guide the light 218 incident on the reflective layer 222 to be incident into the sensor 206, so as to increase the intensity of the light received by the sensor 206. In this embodiment, the number of the opening may be, but is not limited to, two. That is to say, the number of the opening may also be one, and the actual number of the opening may be adjusted according to actual demands. For example, FIG. 2B is a schematic cross-sectional structural view of a second embodiment of the chamber of the present invention. Referring to FIG. 2B, a chamber 402 comprises an air cell 404, an opening 406 and a fan 408, the air cell 404 is communicated with the external environment through the opening 406, and the fan 408 is disposed in the opening 406 and is used for drawing the gas of the external environment into the air cell 404 and exhausting the gas of the external environment out of the air cell 404.

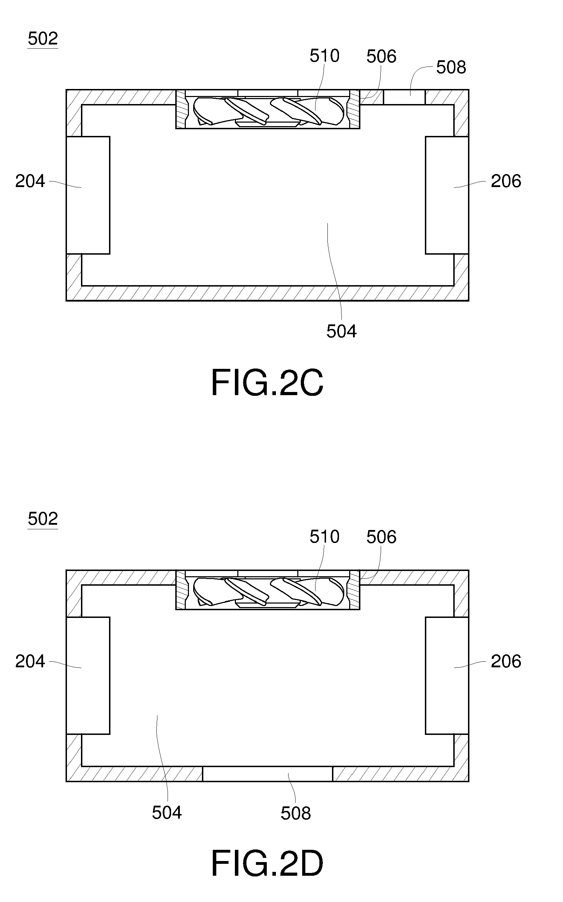

In addition, FIG. 2C is a schematic cross-sectional structural view of a third embodiment of the chamber of the present invention. Referring to FIG. 2C, a chamber 502 comprises an air cell 504, openings 506 and 508 and a fan 510, and the air cell 504 is communicated with the external environment through the openings 506 and 508. In this embodiment, the openings 506 and 508 are disposed at the same side of the chamber 502, and the fan 510 may be disposed in the opening 506 to draw the gas from the external environment into the air cell 504, but this embodiment is not intended to limit the present invention. That is to say, the openings 506 and 508 may be disposed at two opposite sides of the chamber 502 respectively, and the fan 510 may be disposed in the opening 506 to exhaust the gas from the external environment out of air cell 504. FIG. 2D is a schematic cross-sectional structural view of a fourth embodiment of the chamber of the present invention.

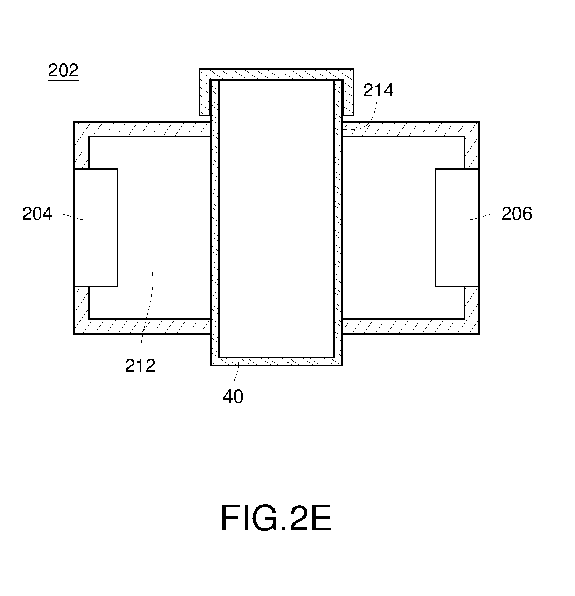

The gas detecting system 100 of the above embodiment is used for detecting a gas from the external environment that is capable of flowing into and out from the air cell, but the above embodiment is not intended to limit the present invention. That is to say, the gas detecting system 100 may also be used for detecting a gas in a gas container 40. FIG. 2E is a schematic cross-sectional structural view of a fifth embodiment of the chamber of the present invention. In this embodiment, a gas to be detected may be firstly filled into the gas container 40, and the gas will not flow out from the gas container 40. Next, the gas container 40 is placed in the chamber 202 through the opening 214. It should be noted that, the gas container 40 may be made of, but is not limited to, a light transmissive material, and the gas of the external environment cannot enter the air cell 212 after the gas container 40 is placed in the chamber 202, so as to prevent the gas of the external environment from influencing the detection result of the gas in the gas container 40.

Next, referring to FIG. 1, the processor 208 may further comprise a filtering unit 224, an amplification unit 226 and an analog-to-digital converter 228. The filtering unit 224 may be electrically connected to the sensor 206, and the amplification unit 226 may be electrically connected to the filtering unit 224 and the analog-to-digital converter 228, and the analog-to-digital converter 228 may be electrically connected to the connection port 210, but this embodiment is not intended to limit the present invention, and the actual electrical connection relation may be adjusted according to actual demands. The computer device 300 may further comprise an alarm 306, electrically connected to the arithmetic unit 304. The arithmetic unit 304 comprises a correction module 310 and a comparison module 312, the correction module 310 is electrically connected to the comparison module 312 and the joining port 302, and the comparison module 312 is electrically connected to the alarm 306. The operation relation and the functions of the filtering unit 224, the amplification unit 226, the analog-to-digital converter 228, the alarm 306, the correction module 310 and the comparison module 312 will be described in detail below.

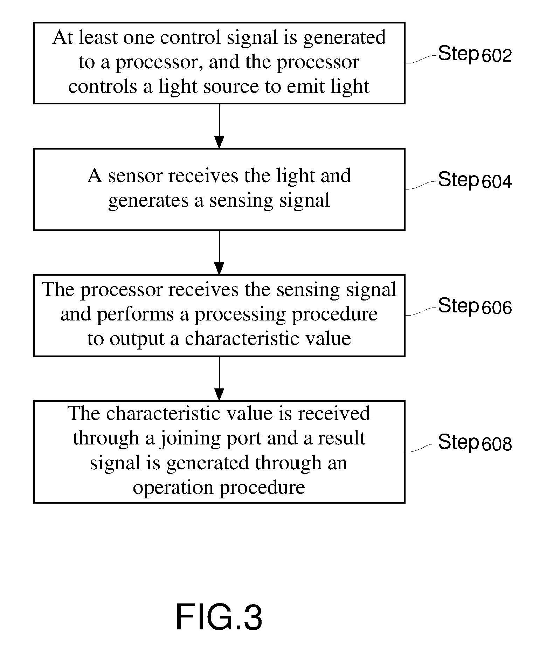

FIG. 3 is a schematic flow chart of a first embodiment of a gas detecting method of the present invention applied to a gas detecting system. Referring to FIG. 2 and FIG. 3, in this embodiment, the gas detecting method comprises the following steps.

In Step 602, at least one control signal is generated to a processor, and the processor controls a light source to emit light, wherein the light source is disposed in a chamber.

In Step 604, a sensor receives the light and generates a sensing signal, wherein the sensor is disposed in the chamber and is used for receiving the light emitted by the light source correspondingly.

In Step 606, the processor receives the sensing signal and performs a processing procedure to output a characteristic value.

In Step 608, the characteristic value is received through a joining port and a result signal is generated through an operation procedure.

Before Step 602 is performed, the air cell 212 may be communicated with an external environment through the openings 214 and 216, such that the air cell 212 contains the gas of the external environment. That is to say, before Step 602 is performed, it needs to determine whether the air cell 212 contains the gas of the external environment, so as to perform gas detection. Next, in Step 602, the processor 208 receives the at least one control signal not shown here generated by the arithmetic unit 304 through the control procedure and controls the light source 204 to emit the light 218. The control signal may be a pulse signal, and the light 218 may be pulsed light, but this embodiment is not intended to limit the present invention. In the control procedure, a user may use a driver or application software to operate the gas measuring device 200 through a man-machine interface, but this embodiment is not used to limit the presented invention. Besides, in the control procedure, a user may also use a time module of the computer device 300 to generate a control signal to preset a specific interval for performing gas detection, that is, a user can periodically monitor and detect the gas of the external environment. In addition, in the control procedure, a user may also use a key 38 of the computer device 300 actuated to generate the control signal, that is, the gas detection is performed when the user intends to monitor and detect the gas of the external environment, which may be adjusted according to actual demands. Furthermore, when the light source 204 is an adjustable light source or the number of the light source 204 is not only one, the arithmetic unit 304 can use a desired control signal, output correspondingly through the control procedure, to control the emission of light of different wavelengths.

In Step 604, the computer device 300 may receive the light 218 correspondingly by the sensor 206 and generate a sensing signal not shown here. In this embodiment, the gas detecting system 100 may detect carbon dioxide, carbon monoxide and methane simultaneously, such that the number of the sensing signal is three, that is, three different signals generated by carbon dioxide, carbonmonoxide and methane of the external environment when absorbing the energy of the light 218 having specific wavelengths. The intensity of the sensing signal is correlated with the concentration of carbon dioxide, carbonmonoxide and methane of the external environment. The higher the concentration of carbon dioxide, carbon monoxide and methane of the external environment is, the more energy of the light 218 having specific wavelengths will be absorbed by carbon dioxide, carbon monoxide and methane, and the weaker the sensing signal will be.

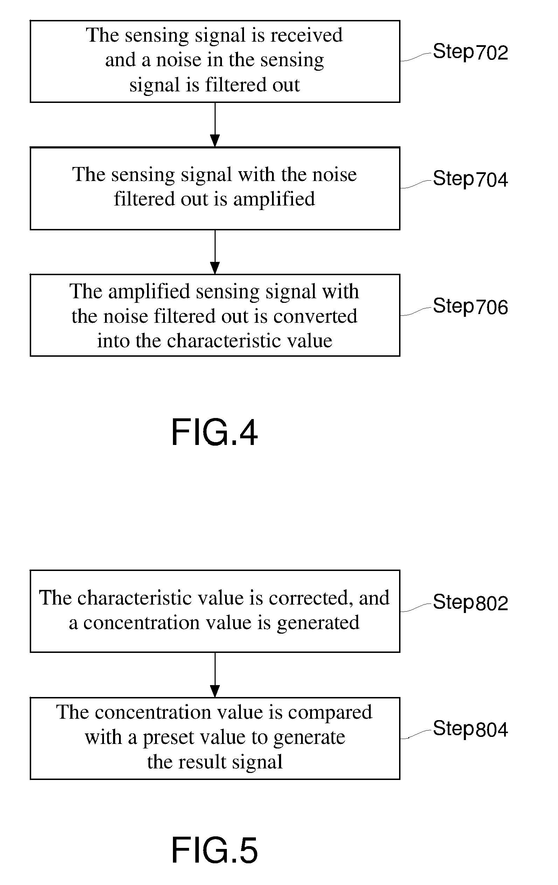

FIG. 4 is a schematic flow chart of an embodiment of Step 606 in FIG. 3. Referring to FIG. 4, the processing procedure comprises the following steps.

In Step 702, the sensing signal is received and a noise in the sensing signal is filtered out.

In Step 704, the sensing signal with the noise filtered out is amplified.

In Step 706, the amplified sensing signal with the noise filtered out is converted into the characteristic value.

That is to say, in the processing procedure, the filtering unit 224 in the processor 208 filters out the noise in the sensing signal, Step 702. Next, the amplification unit 226 amplifies the sensing signal that has passed through the filtering unit 224, Step 704. Finally, the analog-to-digital converter 228 converts the sensing signal that has passed through the filtering unit 224 and the amplification unit 226 into the characteristic value not shown here, Step 706. It should be noted that, in this embodiment, the number of the characteristic value is three as the number of the sensing signal is three.

FIG. 5 is a schematic flow chart of an embodiment of Step 608 in FIG. 3. Referring to FIG. 5, the operation procedure comprises the following steps.

In Step 802, the characteristic value is corrected, and a concentration value is generated.

In Step 804, the concentration value is compared with a preset value to generate the result signal.

That is to say, in the operation procedure, the correction module 310 performs error correction on the characteristic value and generates a concentration value 314 ,Step 802. In this embodiment, the number of the concentration value 314 is three. Next, the comparison module 312 compares the concentration value 314 with a preset value 316 to obtain a result signal 318, Step 804, and the preset value 316 may be, but is not limited to, the concentration of a detected gas acceptable to the human body. For example, but not limited to, the concentration of carbon dioxide may be 1000 PPM below, the concentration of carbon monoxide may be 80 PPM below, and the concentration of methane may be 2500 PPM below.

When the concentration value 314 is lower than or equal to the preset value 316, the result signal 318 is a safe state; and when the concentration value 314 is higher than the preset value 316, the result signal 318 is a dangerous state. In this embodiment, when the result signal 318 is the dangerous state, the alarm 306 electrically connected to the arithmetic unit 304 generates a sound signal not shown here, to warn the user that the concentration of a certain gas component of the external environment is excessively high. Moreover, the sound signal generated by the alarm 306 may also be designed in such a manner that sounds of different frequencies are emitted when different gases exceed the corresponding preset values, so as to enable the user to know of which gas the concentration value is excessively high by hearing, but this embodiment is not intended to limit the present invention.

For example, the gas detecting system 100 may also comprise an information transmission module, which is not shown here. When the result signal 318 is the dangerous state, the information transmission module may send the concentration value 314 and relevant information, for example an evacuation notice, in the form of a short message or an email to persons which need to know. In other words, the gas detecting system 100 may also comprise a forcing module not shown here, for forcing the computer device 300 to power off or to enter a sleep state when the result signal 318 is the dangerous state, so as to force the user to leave the position where the gas detecting system 100 is disposed.

In this embodiment, the computer device 300 may also comprise a display unit not shown here, for displaying the concentration value 314 output by the correction module 310, such that the user may know and manage the concentration value 314. Moreover, the computer device 300 may further comprise a memory unit not shown, for storing the concentration value 314 output by the correction module 310, such that the user may calculate an average concentration value or a total concentration value in each period of time.

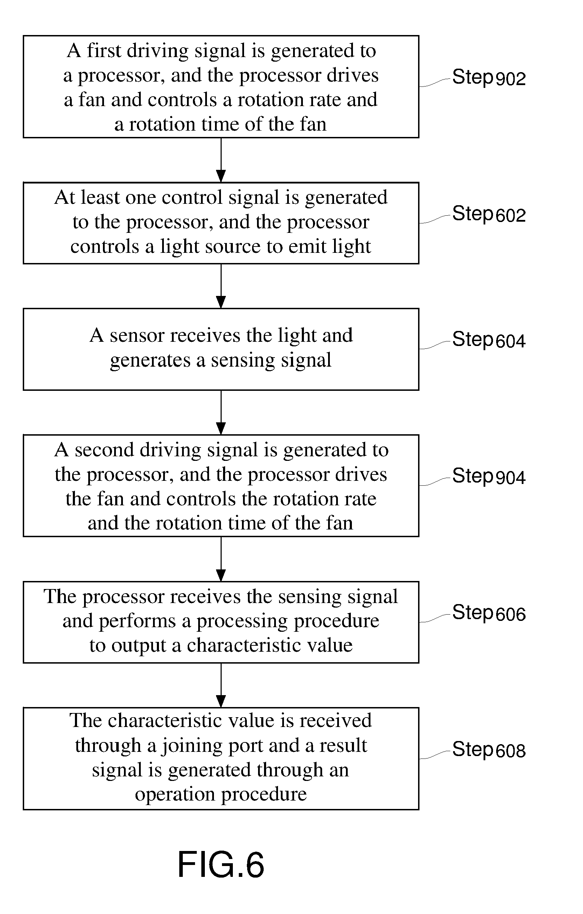

FIG. 6 is a schematic flow chart of a second embodiment of the gas detecting method of the present invention applied to a gas detecting system. Referring to FIG. 2B and FIG. 6, in this embodiment, in addition to the first embodiment described above, the gas detecting method further comprises: before Step 602 is completed, generating a first driving signal to the processor, and the processor driving a fan and controlling a rotation rate and a rotation time of the fan, Step 902; and after Step 604 is completed, generating a second driving signal to the processor, and the processor driving the fan and controlling the rotation rate and the rotation time of the fan, Step 904.

In Step 902, the first driving signal 229 is generated by the arithmetic unit 304 through a control procedure, such that after receiving the first driving signal 229, the processor 208 drives and controls the fan 408 to draw the gas, that is, the fan 408 draws the gas of the external environment into the air cell 212, and the first driving signal 229 may be used for controlling the rotation rate and the rotation time of the fan 408. It should be noted that, the rotation rate and the rotation time of the fan 408 are correlated with the physical properties of the gas of the external environment, for example, but not limited to, molecular weight or diffusion rate.

In Step 904, the second driving signal 231 is generated by the arithmetic unit 304 through the control procedure, such that after receiving the second driving signal 231, the processor 208 drives and controls the fan 408 to exhaust the gas, that is, the fan 408 exhausts the gas in the air cell 212 out from the air cell 212, and the second driving signal 231 may be used for controlling the rotation rate and the rotation time of the fan. It should be noted that, the rotation rate and the rotation time of the fan 408 are correlated with the physical properties of the gas of the external environment, for example, but not limited to, molecular weight or diffusion rate.

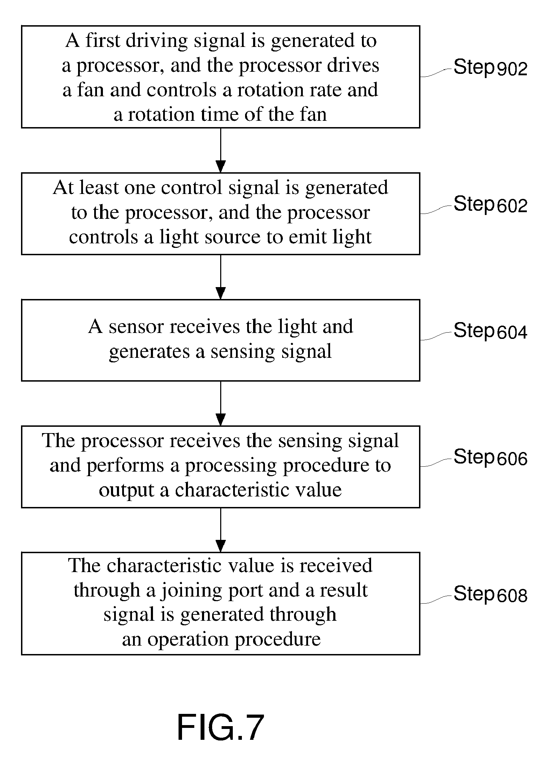

FIG. 7 is a schematic flow chart of a third embodiment of the gas detecting method of the present invention applied to a gas detecting system. Referring to FIG. 2C and FIG. 7, in this embodiment, as the fan 510 in the chamber 502 is merely used for drawing the gas, that is, the fan 510 merely draws the gas of the external environment into the air cell 504, the difference between the gas detecting method of this embodiment and that of the second embodiment lies in that Step 904 is not comprised. The gas in the air cell 504 may flow out from the air cell 504 through the opening 508.

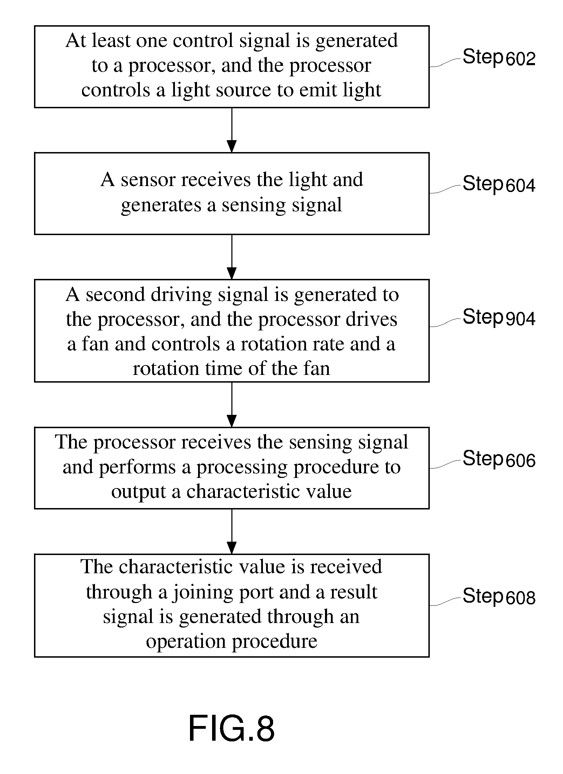

FIG. 8 is a schematic flow chart of a fourth embodiment of the gas detecting method of the present invention applied to a gas detecting system. Referring to FIG. 2D and FIG. 8, in this embodiment, as the fan 510 in the chamber 502 is merely used for exhausting the gas, that is, the fan 510 merely exhausts the gas in the air cell 404 out from the air cell 404, the difference between the gas detecting method of this embodiment and that of the second embodiment is that Step 902 is not comprised. The gas of the external environment may flow into the air cell 504 through the opening 508.

The gas detecting system of the present invention can be used for detecting a gas in an external environment or a gas in a gas container. With the design of the fan, the flow rate of the gas of the external environment flowing into or out from the air cell is increased, thus shortening the detection time. With the design of the reflective layer, the intensity of the light received by the sensor is increased, thus improving the sensitivity of the sensor. With the control signal, the first driving signal and the second driving signal generated by the arithmetic unit through the control procedure, the process of gas detection and the time of gas detection are effectively controlled. As the light emitted by the light source is pulsed light, on one hand, the service life of the light source is prolonged, and the power is saved; on the other hand, the light is completely absorbed during non-detection time. With the time module of the computer device, the gas detecting system can periodically detect the gas. With the key of the computer device, the gas detecting system can perform gas detection at any time. Through the selection of the light source and the sensor, the gas detecting system can detect multiple gases simultaneously. With the arrangement of the alarm, when the concentration of the gas detected is excessively high, the alarm can warn the user that the external environment may be dangerous. Furthermore, the gas detecting system allows the user to mange the average concentration and the total concentration of various detected gases of the external environment in a period of time with the arithmetic unit and the memory unit.

## Claims

1. A gas detecting system (100), for detecting a gas property in an external environment, the gas detecting system (100) comprising:
a computer device (300), comprising:
a joining port (302); and
an arithmetic unit (304), electrically connected to the joining port (302), for outputting at least one control signal after a control procedure; and
a gas measuring device (200), comprising:
a chamber (202), comprising an air cell (212) and at least one opening (214), wherein the air cell (212) is communicated with the external environment through opening (214);
at least one light source (204), disposed in the chamber (202);
at least one sensor (206), disposed in the chamber (202), and for receiving a light (218) emitting by the light source (204) correspondingly;
a connection port (210), electrically connected to the joining port (302); and
a processor (208), electrically connected to the light source (204), the sensor (206) and the connection port (210), for controlling the light source (204) to emit the light (218) according to the control signal, such that the sensor (206) generates a sensing signal, and the processor (208) receives and processes the sensing signal and outputs a characteristic value to the computer device (300).

2. The gas detecting system according to claim 1, wherein a reflective layer (222) is coated on an inner surface (220) of the chamber (202).

3. The gas detecting system according to claim 1, wherein the gas measuring device (400) further comprises a fan (408), disposed in the opening (214).

4. The gas detecting system according to claim 1, wherein the processor (208) controls a rotation rate and a rotation time of the fan (408) by a first driving signal and a second driving signal, and the rotation rate and the rotation time are correlated with the gas property.

5. The gas detecting system according to claim 1, wherein the processor (208) further comprises a filtering unit (224), an amplification unit (226) and an analog-to-digital converter (228), the sensor (206) receives the light (218) and generates a sensing signal, the filtering unit (224) is used for filtering out a noise in the sensing signal, the amplification unit (226) is used for amplifying the sensing signal with the noise filtered out, and the analog-to-digital converter (228) is used for converting the amplified sensing signal with the noise filtered out into the characteristic value.

6. The gas detecting system according to claim 1, wherein the arithmetic unit (304) comprises a correction module (310) and a comparison module (312), the correction module (310) is used for receiving the characteristic value and generating a concentration value, and the comparison module (312) is used for comparing the concentration value with a preset value (316) to generate a result signal (318).

7. The gas detecting system according to claim 6, wherein when the concentration value is lower than or equal to the preset value (316), the result signal (318) is a safe state; and when the concentration value is higher than the preset value (316), the result signal (318) is a dangerous state.

8. The gas detecting system according to claim 7, wherein the computer device (300) further comprises an alarm (306), electrically connected to the arithmetic unit (304), and when the result signal (318) is the dangerous state, the alarm (306) generates a sound signal.

9. A gas detecting method, comprising:
generating at least one control signal to a processor (208), and the processor (208) controlling a light source (204) to emit light (218), wherein the light source (204) is disposed in a chamber (202);
a sensor (206) receiving the light (218) and generating a sensing signal, wherein the sensor (206) is disposed in the chamber (202) and is used for receiving the light (218) emitted by the light source (204) correspondingly;
the processor (208) receiving the sensing signal and performing a processing procedure to output a characteristic value; and
receiving the characteristic value through a joining port (302) and generating a result signal (318) through an operation procedure.

10. The gas detecting method according to claim 9, wherein before the step of generating the control signal to the processor, the gas detecting method further comprises: generating a first driving signal to the processor (208), and the processor (208) driving a fan (510) and controlling a rotation rate and a rotation time of the fan (510), wherein the rotation rate and the rotation time are correlated with a gas property.

11. The gas detecting method according to claim 10, wherein after the step of the sensor (206) receiving the light (218) and generating thesensingsignal,thegasdetecting methodfurther comprises:generating a second driving signal to the processor (208), and the processor (208) driving the fan (510) and controlling the rotation rate and the rotation time of the fan (510), wherein the rotation rate and the rotation time are correlated with the gas property.

12. The gas detecting method according to claim 9, wherein after the step of the sensor (206) receiving the light (218) and generating the sensing signal, the gas detecting method further comprises: generating a second driving signal to the processor (208), and the processor (208) driving a fan (510) and controlling a rotation rate and a rotation time of the fan (510), wherein the rotation rate and the rotation time are correlated with a gas property.

13. The gas detecting method according to claim 9, wherein the processing procedure comprises:
receiving the sensing signal and filtering out a noise in the sensing signal;
amplifying the sensing signal with the noise filtered out; and
converting the amplified sensing signal with the noise filtered out into the characteristic value.

14. The gas detectingmethod according to claim 9, wherein the operation procedure comprises:
correcting the characteristic value and generating a concentration value; and
comparing the concentration value with a preset value to generate the result signal.

15. The gas detecting method according to claim 9, wherein after the step of receiving the characteristic value through the joining port (210) and generating the result signal (318), the gas detecting method further comprises: when the result signal (318) is a dangerous state, an alarm (306) generating a sound signal.
